# EUROPEAN PATENT SPECIFICATION

(11) **EP 0 807 613 B1**
(45) Date of publication and mention of the grant of the patent: **12.02.2003**
(21) Application number: 97107104.8
(22) Date of filing: 29.04.1997
(51) Int. Cl.: C04B 28/02

(54) **Accelerating agent, spraying material and spraying method employing it**
Beschleunigungsmittel, Sprühmaterial und Verfahren das dieses Material verwendet
Accélérateur, matériau pour pulvérisation et procédé utilisant celui-ci

(30) Priority: 13.05.1996 JP 11799596
(43) Date of publication of application: 19.11.1997
(73) Proprietor: DENKI KAGAKU KOGYO KABUSHIKI KAISHA, Chiyoda-ku Tokyo (JP)
(72) Inventor: Ishida, Atsumu, Denki Kagaku Kogyo K.K., Oumi-cho, Nishikubiki-gun, Niigata-ken (JP); Yanagihara, Tsuyoshi, Denki Kagaku Kogyo K.K., Oumi-cho, Nishikubiki-gun, Niigata-ken (JP); Mihara, Toshio, Denki Kagaku Kogyo K.K., Oumi-cho, Nishikubiki-gun, Niigata-ken (JP)
(74) Representative: Wächtershäuser, Günter, Prof. Dr.

(56) References cited:
- EP-A- 0 254 501
- EP-A- 0 657 398
- JP-A- 4 331 750
- US-A- 4 904 503
- DATABASE WPI Section Ch, Week 9302 Derwent Publications Ltd., London, GB; Class L02, AN 93-012013 XP002038647 & JP 04 338 142 A (DENKI KAGAKU KOGYO KK) , 25 November 1992
- CHEMICAL ABSTRACTS, vol. 108, no. 16, 18 April 1988 Columbus, Ohio, US; abstract no. 136767m, XP000157816 & JP 62 297 248 A (DENKI KAGAKU KOGYO K.K.) 24 December 1987
- DATABASE WPI Section Ch, Week 9539 Derwent Publications Ltd., London, GB; Class L02, AN 95-299385 XP002038648 & JP 07 196 351 A (ONODA CEMENT CO LTD) , 1 August 1995
- PATENT ABSTRACTS OF JAPAN vol. 015, no. 238 (C-0841), 19 June 1991 & JP 03 075249 A (DENKI KAGAKU KOGYO KK), 29 March 1991,
- CHEMICAL ABSTRACTS, vol. 113, no. 20, 12 November 1990 Columbus, Ohio, US; abstract no. 177239n, XP000192485 & JP 02 141 449 A (DENKI KAGAKU KOGYO K.K.)

## Description

The present invention relates to an accelerating agent, a spraying material and a spraying method employing it. Particularly, it relates to an accelerating agent which improves the quick setting property and adhesion of cement concrete sprayed to a ceiling or wall of a tunnel or pit, a spraying material comprising such an accelerating agent, and a spraying method for cement concrete employing such a spraying material.

For the purpose of the present invention, cement concrete is a general term which covers a cement paste, mortar and concrete.

Heretofore, it has been common that during excavation of a tunnel, concrete is sprayed on the excavated surface for lining to prevent falling of the excavated surface or collapse due to spring water. Further, it is common to incorporate an accelerating agent to such concrete to impart a quick setting property.

In tunneling work, it has been common to adopt a method in which primary spraying is followed by secondary lining. However, there is a recent trend to widely employ a single shell system whereby the work is completed by the primary spraying only.

Spraying methods for cement concrete are generally classified into two types of dry system and wet system.

The dry system spraying method is a method wherein a dry mixed mixture of cement, aggregate and an accelerating agent is transported by compressed air and during the transportation, water is added and mixed, followed by spraying from a nozzle to the surface to be treated. The wet system spraying method is a method in which concrete kneaded with water is transported, and during the transportation, an accelerating agent is added and mixed, followed by spraying from a nozzle to the surface to be treated.

As the accelerating agent to be used for the spraying method, a composition comprising calcium aluminate and an alkali metal carbonate or aluminate, a composition comprising calcined alunite, lime or an alkali metal carbonate, or a composition comprising an alkali metal carbonate and aluminate, has been proposed (e.g. JP-B-56-27457 or JP-A-60-260452). These accelerating agents usually contain an alkali metal component such as sodium or potassium in the form of a hydroxide, a carbonate, a silicate or an aluminate, in order to attain quick setting.

Such an alkali metal component is strongly alkaline, and when incorporated in cement concrete, it may cause an alkali-aggregate reaction depending upon the type of aggregate used. Thus, it has been pointed out heretofore that it sometimes adversely affects a concrete structure.

Further, such a strongly alkaline substance is soluble in water, and if it directly contacts the skin of a worker, it causes a serious damage to the skin, whereby the working environment at the excavation site will be substantially deteriorated. Further, there has been a problem that it is likely to dissolve in soil water, thus leading to environmental pollution of the surrounding area.

To solve such a problem, a setting accelerator comprising calcium aluminate, calcium sulfoaluminate and a basic aluminum salt, was proposed as an accelerator for spraying which contains substantially no or little alkali metal component (JP-A-8-48553).

However, such an accelerating agent had problems such that the quick setting property was inadequate, and rebound of the sprayed cement concrete was substantial, the loss of material was accordingly substantial, and dust was likely to be formed.

The present inventors have conducted an extensive study to solve such problems and as a result, have found that by using a certain specific accelerating agent, it is possible to obtain a spraying concrete which provides excellent adhesion and quick setting property without deteriorating the working environment or the surrounding environment. The present invention has been accomplished on the basis of this discovery.

That is, the present invention provides an accelerating agent which comprises calcium aluminosilicate glass and aluminum sulfate as effective components as defined by claim 1, a spraying material which comprises cement and such an accelerating agent as effective components, a spraying concrete which contains such a spraying material, and a spraying method for cement concrete which comprises using such a spraying material.

Now, the present invention will be described in detail with reference to the preferred embodiments.

The calcium aluminosilicate glass (hereinafter referred to as CAS glass) to be used in the present invention, is necessary to impart a quick setting property, and is usually the one vitrified by rapidly cooling a melt formed at a high temperature of e.g. from 1,200 to 1,700°C by e.g. an electric furnace using CaO material, Al₂O₃ material and SiO₂ material. The CaO material may, for example, be quick lime, slaked lime, limestone or calcium carbonate. The Al₂O₃ material may, for example, be alumina, bauxite, diaspore, feldspar or clay. The SiO₂ material may, for example, be silica sand, clay, diatomaceous earth or silicon oxide. It is preferred to use calcium carbonate, alumina or silicon oxide which does not substantially contain an alkali metal component. The composition of CAS glass preferably comprises from 40 to 50 wt% of CaO, from 40 to 50 wt% of Al₂O₃ and from 10 to 20 wt% of SiO₂. If CaO or Al₂O₃ is outside such a range, no adequate quick setting property may sometimes be obtained. If SiO₂ is less than 10 wt%, good strength may not last for a long period of time, and if it exceeds 20 wt%, the initial strength may sometimes be low.

For the purpose of the present invention, glass is meant for "one having a glass transition point" as commonly used in the field of glass, and it is not necessarily entirely glass and may be one having a vitrification ratio of at least 60%.

As a method for measuring the vitrification ratio, a method may be employed wherein a sample is heated at 1,000°C for 2 hours and then gradually cooled at a cooling rate of 5°C/min, whereby area S₀ of the main peak of crystal mineral is obtained by a powder X-ray diffraction method, and the vitrification ratio is obtained by using the formula of glass vitrification ratio = (l-S/So)×100, from this So and the main peak area S of the crystal in the sample.

The particle size of CAS glass of the present invention is not particularly limited, but it is preferably at a level with a Blaine value of from 3,000 to 9,000 cm²/g.

Aluminum sulfate is used preferably in an amount of from 20 to 50 parts by weight, more preferably from 30 to 40 parts by weight, per 100 parts by weight of CAS glass. If the amount of aluminum sulfate is outside this range, no adequate quick setting property may sometimes be obtained.

The accelerating agent of the present invention comprises CAS glass and aluminum sulfate as effective components, and it may contain alkali metal components such as sodium and potassium. The total amount of such alkali metal components is preferably at most 0.05 wt% as calculated as sodium oxide (Na₂O).

The particle size of the accelerating agent varies depending upon the purpose or manner of use but it is at a level with a Blaine value of from 3,000 to 9,000 cm²/g. If the Blaine value is less than 3,000 cm²/g, the quick setting property may sometimes deteriorate, and even if it exceeds 9,000 cm²/g, no additional effects can be expected.

The accelerating agent is used preferably in an amount of from 3 to 15 parts by weight, more preferably from 4 to 10 parts by weight, in 100 parts by weight of the spraying material comprising cement and the accelerating agent. If the amount of the accelerating agent is less than 3 parts by weight, the quick setting property tends to be inadequate, and even if it exceeds 15 parts by weight, no additional effects will be obtained.

Here, the cement to be used in the present invention is not particularly limited and may, for example, be various Portland cements such as normal, high early strength, ultra-high early strength and moderate heat Portland cements, various mixed cements having blast furnace slag or fly ash mixed to such Portland cements, expansive cements having an expanding agent mixed to such Portland cements, and special cements such as alumina cements such as alumina cement, white cement and colloidal cement.

Further, various other additives may be incorporated to the accelerating agent or the spraying material of the present invention.

For example, it is possible to incorporate one or more additives selected from setting adjusting agents, aggregates such as silica sand, natural sand and gravel, fiber materials such as glass fibers, carbon fibers and steel fibers, underwater non-separable admixtures such as polymer emulsions (latexes), colorants (pigments), AE agents, water-reducing agents, AE water-reducing agents, fluidizing agents, rust-proofing agents and methylcellulose, thickeners, blowing agents, foaming agents, calcium compounds such as calcium hydroxide, and anti-freezing agent, within a range not to impair the purpose of the present invention.

To prepare the accelerating agent for the spraying material of the present invention, a conventional mixing and stirring apparatus such as an inclined barrel mixer, an omni mixer, a twin-cylinder mixer, a Henshel mixer or a Naughter mixer, may be used.

The mixing may be carried out in such a manner that the respective materials are mixed at the time of application, or some or all of such materials may be mixed beforehand.

Further, the aging method is not particularly limited, and a commonly employed aging method may be used.

For the spraying operation of the spraying material of the present invention, either a dry spraying method or a wet spraying method may be employed.

Now, the present invention will be described in further detail with reference to Examples. In Examples, "%" means "wt%".

### EXAMPLE 1

CaO material, Al₂O₃ material and SiO₂ materiel were mixed and melted in an electric furnace at 1,600°C. The melt thereby obtained was quenched by a high pressure air method, followed by pulverization to obtain CAS glass having a Blaine value of 5,000 ± 200 cm²/g as identified in Table 1.

100 parts by weight of the prepared CAS glass and 35 parts by weight of aluminum sulfate α were mixed to obtain an accelerating agent. The alkali metal components in this accelerating agent were analyzed, whereby Na₂O eq. i.e. the total amount of alkali metal components, was not more than 0.05%.

This accelerating agent was mixed with cement to obtain a spraying material, whereby the amount of the accelerating agent was 7 parts by weight in 100 parts by weight of the spraying material comprising cement A and the accelerating agent.

700 g of the obtained spraying material and 2,100 g of fine aggregate were blended and dry-mixed for 30 seconds at a low speed by means of a small size table top type mortar mixer. Then, 350 g of water was added thereto, and the mixture was kneaded for 10 seconds at a high speed to obtain cement mortar, whereupon the setting property of the cement mortar was evaluated by a proctor penetration resistance. The results are shown in Table 2.

For the purpose of comparison, an experiment was carried out in the same manner as above by using a commercially available accelerating agent instead of the accelerating agent of the present invention. The results are shown also in Table 2.

### Materials used

CaO material: Calcium carbonate, first grade reagent
Al₂O₃ material: Aluminum oxide, first grade reagent
SiO₂ material: Silicon oxide, first grade reagent
Aluminum sulfate α: Anhydride, first grade reagent, Na₂O eq. 0.04%
Commercially available accelerating agent: Main
component: calcium aluminate, Na₂O eq. 15.8%
Cement A: Normal Portland cement, Blaine value: 3,300 cm²/g, Na₂O eq. 0.48%
Fine aggregate:River sand produced in Himekawa, Niigata-ken, Japan, specific gravity: 2.62
Water: City water

### Measuring methods

Alkali metal analysis: By means of atomic absorption spectroscopy, in addition to sodium, other alkali metal components were also calculated as Na₂O, and the total amount of alkali metal components was represented by Na₂O eq.

Proctor penetration resistance: The mixture was kneaded in a constant temperature chamber of 20°C, and then it was immediately divided into two layers in formworks and quickly packed while pushing the mortar by a pushing rod, whereupon the proctor penetration resistance was measured every a predetermined period of time after introducing water, by means of a needle having a needle head area of 1/40 in^{⁻2} in accordance with ASTM C 403-65 T.

**Table 1**

| CAS glass symbol | CaO (%) | Al₂O₃ (%) | SiO₂ (%) | Vitrification ratio (%) |
|---|---|---|---|---|
| a | 60 | 35 | 5 | 65 |
| b | 60 | 30 | 10 | 75 |
| c | 50 | 45 | 5 | 91 |
| d | 50 | 40 | 10 | 92 |
| e | 50 | 30 | 20 | 95 |
| | | | | |
| f | 45 | 45 | 10 | 95 |
| g | 45 | 40 | 15 | 97 |
| h | 40 | 55 | 5 | 92 |
| i | 40 | 50 | 10 | 93 |
| j | 40 | 45 | 15 | 96 |
| | | | | |
| k | 40 | 40 | 20 | 96 |
| l | 40 | 30 | 30 | 96 |
| m | 30 | 60 | 10 | 68 |
| n | 30 | 50 | 20 | 75 |
| o | 30 | 40 | 30 | 73 |

**Table 2**

| Test No. | CAS glass | Proctor penetration resistance (psi) | | | | | Notes |
|---|---|---|---|---|---|---|---|
| | | 1 min | 2 min | 3 min | 5 min | 10 min | |
| 1-1 | - | 100 | 100 | 200 | 300 | 800 | Comparative |
| 1-2 | a | 600 | 1000 | 2200 | 3000 | 4000 | Invention |
| 1-3 | b | 500 | 1100 | 2600 | 3200 | 4200 | Invention |
| 1-4 | c | 600 | 1200 | 2500 | 3000 | 4100 | Invention |
| 1-5 | d | 900 | 1200 | 2500 | 4000 | - | Invention |
| | | | | | | | |
| 1-6 | e | 700 | 1300 | 2600 | 3200 | 4400 | Invention |
| 1-7 | f | 800 | 1500 | 2800 | 4100 | - | Invention |
| 1-8 | g | 900 | 1500 | 3000 | 4100 | - | Invention |
| 1-9 | h | 600 | 1000 | 2500 | 3200 | 4000 | Invention |
| 1-10 | i | 900 | 1300 | 2900 | 4100 | - | Invention |
| | | | | | | | |
| 1-11 | j | 900 | 1600 | 2900 | 4200 | - | Invention |
| 1-12 | k | 700 | 1200 | 3000 | 4300 | - | Invention |
| 1-13 | l | 500 | 1000 | 2100 | 3200 | 4200 | Invention |
| 1-14 | m | 600 | 1000 | 2500 | 3500 | 4300 | Invention |
| 1-15 | n | 800 | 1500 | 2800 | 3700 | 4300 | Invention |
| | | | | | | | |
| 1-16 | o | 600 | 1500 | 3000 | 3500 | 4200 | Invention |
| 1-17 | *l | 700 | 900 | 1500 | 2100 | 4600 | Comparative |
| *l in the column for "CAS glass" indicates that the commercially available accelerating agent was used. Symbol "-" for the proctor penetration resistance indicates that no measurement was made. | | | | | | | |

### EXAMPLE 2

An accelerating agent was prepared in the same manner as in Example 1 using CAS glass g and aluminum sulfate β. Na₂O eq. in the prepared accelerating agent was 0.04%.

The test was carried out in the same manner as in Example 1 except that this accelerating agent was used. The results are shown in Table 3. Further, for the purpose of comparison, the test was carried out in the same manner as above except that gypsum was used instead of aluminum sulfate. The results are shown also in Table 3.

### Materials used

Aluminum sulfate β: 14 to 18 hydrate, first grade reagent, Na₂O eq. 0.04%
Gypsum: II-type anhydrous gypsum, Blaine value: 5,900 cm²/g

**Table 3**

| Test No. | Aluminum sulfate | Proctor penetration resistance (psi) | | | | | Notes |
|---|---|---|---|---|---|---|---|
| | | 1 min | 2 min | 3 min | 5 min | 10 min | |
| 1-8 | α 35 | 900 | 1500 | 3000 | 4100 | - | Invention |
| 2-1 | β 35 | 700 | 1400 | 3100 | 4000 | - | Invention |
| 2-2 | ∗135 | 200 | 400 | 500 | 500 | 800 | Comparative |
| "Aluminum sulfate" represents parts by weight per 100 parts by weight of CAS glass. ∗l indicates that gypsum was used instead of aluminum sulfate. Symbol "-" for the proctor penetration resistance indicates that no measurement was made. | | | | | | | |

### EXAMPLE 3

An accelerating agent was prepared in the same manner as in Example 1 using CAS glass g and aluminum sulfate α as identified in Table 4. Na₂O eq. in the prepared accelerating agent was 0.04%.

The test was carried out in the same manner as in Example 1 except that this accelerating agent was used. The results are shown also in Table 4.

**Table 4**

| Test No. | Aluminum sulfate | Proctor penetration resistance (psi) | | | | | Notes |
|---|---|---|---|---|---|---|---|
| | | 1 min | 2 min | 3 min | 5 min | 10 min | |
| 3-1 | 0 | 400 | 500 | 900 | 1000 | 1200 | Comparative |
| 3-2 | 20 | 500 | 1100 | 2600 | 3300 | 4500 | Invention |
| 3-3 | 30 | 800 | 1200 | 2900 | 4000 | - | Invention |
| 1-8 | 35 | 900 | 1500 | 3000 | 4100 | - | Invention |
| 3-4 | 40 | 1000 | 1700 | 3300 | 4100 | - | Invention |
| 3-5 | 50 | 1200 | 2000 | 2700 | 3200 | 4200 | Invention |
| "Aluminum sulfate" represents parts by weight per 100 parts by weight of CAS glass. Symbol "-" for the proctor penetration resistance indicates that no measurement was made. | | | | | | | |

### EXAMPLE 4

An accelerating agent was prepared in the same manner as in Example 1 using CAS glass g and aluminum sulfate α. Na₂O eq. in the prepared accelerating agent was 0.04%.

The test was carried out in the same manner as in Example 1 except that this accelerating agent and cement as identified in Table 5 were used. The results are shown also in Table 5.

### Materials used

Cement B: Moderate heat Portland cement, Blaine value: 3,100 cm²/g, Na₂O eq. 0.46%
Cement C: High early strength Portland cement, Blaine value: 4,400 cm²/g, Na₂O eq. 0.43%

**Table 5**

| Test No. | Cement | Proctor penetration resistance (psi) | | | | |
|---|---|---|---|---|---|---|
| | | 1 min | 2 min | 3 min | 5 min | 10 min |
| 1-8 | A | 900 | 1500 | 3000 | 4100 | - |
| 4-1 | B | 700 | 1200 | 2600 | 3200 | 4400 |
| 4-2 | C | 1000 | 1900 | 2700 | 4000 | - |
| Symbol "-" for the proctor penetration resistance indicates that no measurement was made. | | | | | | |

### EXAMPLE 5

An accelerating agent was prepared in the same manner as in Example 1 using CAS glass g and aluminum sulfate α. Na₂O eq. in the prepared accelerating agent was 0.04%.

The test was carried out in the same manner as in Example 1 except that this accelerating was used in an amount shown by parts by weight in Table 6 in 100 parts by weight of the spraying material. The results are shown also in Table 6.

**Table 6**

| Test No. | Accelerating agent | Proctor penetration resistance (psi) | | | | |
|---|---|---|---|---|---|---|
| | | 1 min | 2 min | 3 min | 5 min | 10 min |
| 5-1 | 3 | 600 | 1100 | 2400 | 3000 | 4500 |
| 5-2 | 4 | 700 | 1200 | 2600 | 3200 | - |
| 1-8 | 7 | 900 | 1500 | 3000 | 4100 | - |
| 5-3 | 10 | 1100 | 1800 | 3200 | 4500 | - |
| 5-4 | 15 | 1300 | 2200 | 3400 | 4600 | - |
| Symbol "-" for the proctor penetration resistance indicates that no measurement was made. | | | | | | |

### EXAMPLE 6

Using unit amounts of materials being 360 kg/m³ of cement A, 1,130 kg/m³ of fine aggregate, 756 kg/m³ of coarse aggregate and 162 kg/m³ of water, an accelerating agent containing not more than 0.05% of Na₂O eq. as shown in Table 7 was mixed in an amount of 7 parts by weight in 100 parts by weight of the spraying material, to obtain concrete wherein the maximum aggregate size is 10 mm and the fine aggregate proportion is 60%. This concrete was sprayed to a simulated tunnel having a height of 3.5 m and a width of 3 m by means of a dry spraying machine and a wet spraying machine, whereupon the amount of the concrete fallen in the tunnel was measured, and the rebound ratio was calculated. The results are shown also in Table 7.

### Material used

- Coarse aggregate:: River gravel produced in Himekawa, Niigata-ken, Japan, specific gravity: 2.66

### Measuring method

Rebound ratio: The ratio of the rebound amount at the time of spraying of the concrete which fell off without attaching to the simulated tunnel to the amount of the concrete used for spraying.

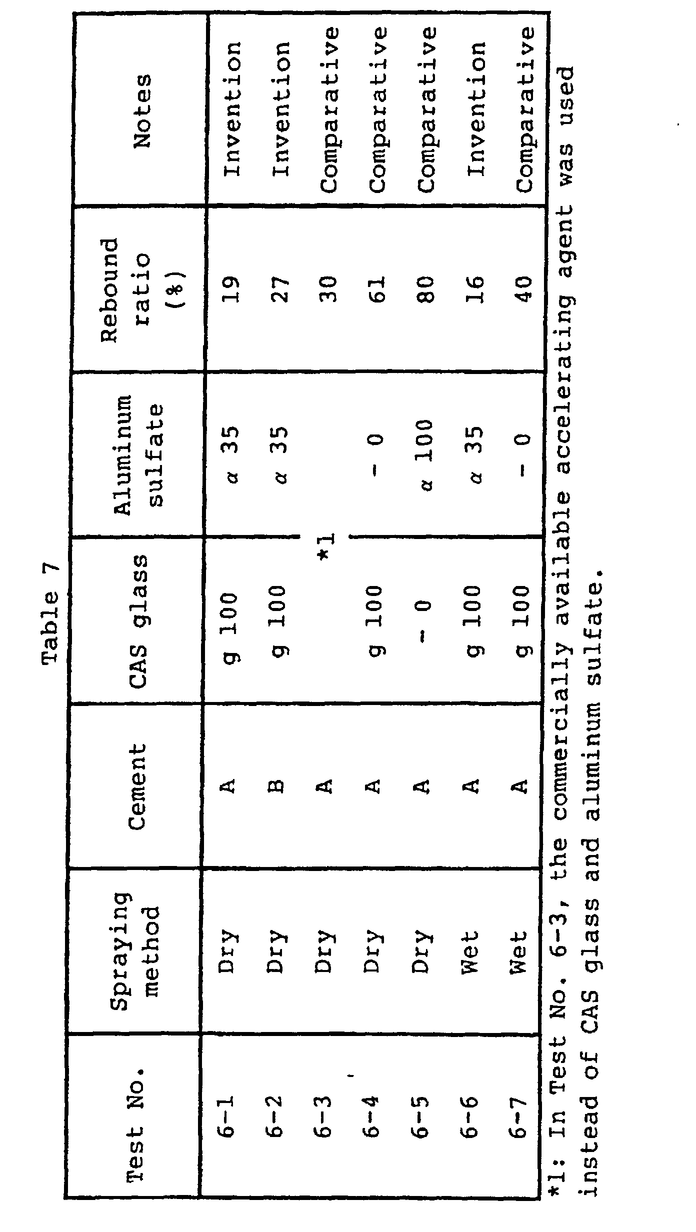

As described in the foregoing, the accelerating agent of the present invention is substantially free from alkali metal components, whereby there will be no adverse effects to the working environment or the surrounding environment, and it presents an excellent quick setting property.

## Claims

1. An accelerating agent having a Blaine value of from 3,000 to 9,000 cm²/g, which comprises calcium aluminosilicate glass and aluminum sulfate as effective components.

2. A spraying material which comprises cement and the accelerating agent as defined in Claim 1 as effective components.

3. A spraying concrete which contains the spraying material as defined in claim 2.

4. A spraying method for cement concrete which comprises using the spraying material as defined in claim 2.

## Patentansprüche

1. Beschleunigungsmittel mit einem Blaine-Wert von 3.000 bis 9.000 cm²/g, das Calciumaluminiumsilikatglas und Aluminiumsulfat als wirksame Bestandteile umfasst.

2. Spritz- oder Sprühmaterial, das Zement und das Beschleunigungsmittel, wie es in Anspruch 1 definiert ist, als wirksame Bestandteile umfasst.

3. Spritz- oder Sprühbeton, der das Spritz- oder Sprühmaterial, wie es in Anspruch 2 definiert ist, umfasst.

4. Spritz- oder Sprühverfahren für Zementbeton, das die Verwendung des Spritz- oder Sprühmaterials, wie es in Anspruch 2 definiert ist, umfasst.

## Revendications

1. Agent accélérateur ayant une valeur Blaine de 3000 à 9000 cm²/g, comprenant du verre d'aluminosilicate calcique et du sulfate d'aluminium comme composants actifs.

2. Matière à pulvériser comprenant un ciment et l'agent accélérateur tel que défini dans la revendication 1 comme composants actifs.

3. Béton à pulvériser contenant la matière à pulvériser telle que définie dans la revendication 2.

4. Procédé de pulvérisation pour un béton de ciment, comprenant l'utilisation de la matière à pulvériser telle que définie dans la revendication 2.
